# EUROPEAN PATENT APPLICATION

(11) **EP 1 821 004 A1**
(43) Date of publication of application: **22.08.2007**
(21) Application number: 06425095.4
(22) Date of filing: 17.02.2006
(51) Int. Cl.: F16H 61/30

(54) **Servo with return spring for a gear change**

(71) Applicant: MAGNETI MARELLI POWERTRAIN S.p.A., 20011 Corbetta (IT)
(72) Inventor: Lorenzoni, Marcello, 40132 Bologna (IT); Mengoli, Nerio, 40033 Casalecchio di Reno (IT); Giorgini, Stefano, 40061 Minerbio (IT)
(74) Representative: Jorio, Paolo

(57) **Abstract**

Described herein is a servo (1) for a gear change provided with a control shaft (2); the servo (1) is provided with: a first actuator (5), which is directly coupled to the control shaft (2) for displacing the control shaft (2) axially along a central axis (3) thereof; and a second actuator, which is coupled to the control shaft (2) for rotating the control shaft (2) about its central axis (3); the first actuator (5) has: a thrust device (6), which is coupled to the control shaft (2) for pushing the control shaft (2) along the central axis (3) in a first direction (8); and a spring (7), which rests against one end (9) of the control shaft (2) and is normally compressed for pushing the control shaft (2) along the central axis (3) in a second direction (10) opposite to the first direction (8).

## Description

### TECHNICAL FIELD

The present invention relates to a servo for a gear change.

### BACKGROUND ART

There is an increasingly widespread use of servo-assisted gear changes, which are structurally similar to a manual gear change of a traditional type but for the fact that the clutch pedal and the gear lever operated by the driver are replaced by corresponding electrical or hydraulic servos. Using a manual servo-assisted gear change, the driver only has to issue the order to pass to a higher gear or else to a lower gear to a transmission control unit, and the transmission control unit autonomously carries out gear change by acting both on the engine and on the servos associated to the clutch and gear change.

An order for change of gear can be generated manually, i.e., following upon a command imparted by the driver, or else automatically, i.e., independently of the action of the driver. When the order for performing a change of gear is generated, the transmission control unit drives the clutch servo for opening the clutch so as to separate a primary shaft of the gear change mechanically from an engine shaft. At the same time, the transmission control unit acts on the engine control unit in order to reduce temporarily the driving torque supplied by the engine .

Once the transmission control unit has verified opening of the clutch, it drives the gear-change servo to disengage the gear currently engaged. When the transmission control unit has verified disengagement of the gear, it drives the gear-change servo for displacing the gear-change control shaft so as to enable engagement of the new gear. Once the transmission control unit has verified that the gear-change control shaft has reached the desired position, it drives the gear-change servo for engaging the new gear.

Finally, when the transmission control unit has verified engagement of the new gear, it drives the clutch servo for closing the clutch so as to render the primary shaft of the gear change and the engine shaft angularly fixed to one another. At the same time, the transmission control unit acts on the engine control unit for restoring the driving torque supplied by the engine .

Generally, the gear-change servo is of a hydraulic type and acts on a gear-change control shaft to impress on the control shaft both an axial displacement, i.e., along an axis of symmetry, for selecting the range of the gears, and a rotation about the axis of symmetry for engaging and disengaging the individual gears. Consequently, the gear-change servo comprises a first hydraulic actuator, mechanically coupled to the control shaft for axial displacement of the control shaft, and a second hydraulic actuator, mechanically coupled to the control shaft for rotating the control shaft.

It has been proposed to set the first hydraulic actuator around an intermediate portion of the control shaft. In this solution, the first hydraulic actuator has two chambers, which are alternatively filled with a pressurized fluid for displacing the control shaft axially in the two directions, are traversed by the control shaft, are set in series along the control shaft, and are separated from one another by a flange, which is fixed to the control shaft and defines a piston of the hydraulic actuator.

However, the constructional solution described above for the first hydraulic actuator is relatively costly and cumbersome in so far as it entails the use of two independent solenoid valves, each of which controls filling of one of the two chambers with the pressurized fluid. In addition, in order to vary the stroke of the first hydraulic actuator, it is necessary to carry out some structural modifications to the first hydraulic actuator . Consequently, for each model of servo-assisted gear change, it is necessary to provide a specific first hydraulic actuator.

### DISCLOSURE OF INVENTION

The aim of the present invention is to provide a servo for a gear change that will be free from the drawbacks described above and, in particular, will be easy and inexpensive to produce, will be compact, and will be readily adaptable to different models of servo-assisted gear changes.

According to the present invention, a servo is provided for a gear change according to what is recited in the annexed claims.

### BRIEF DESCRIPTION OF THE DRAWINGS

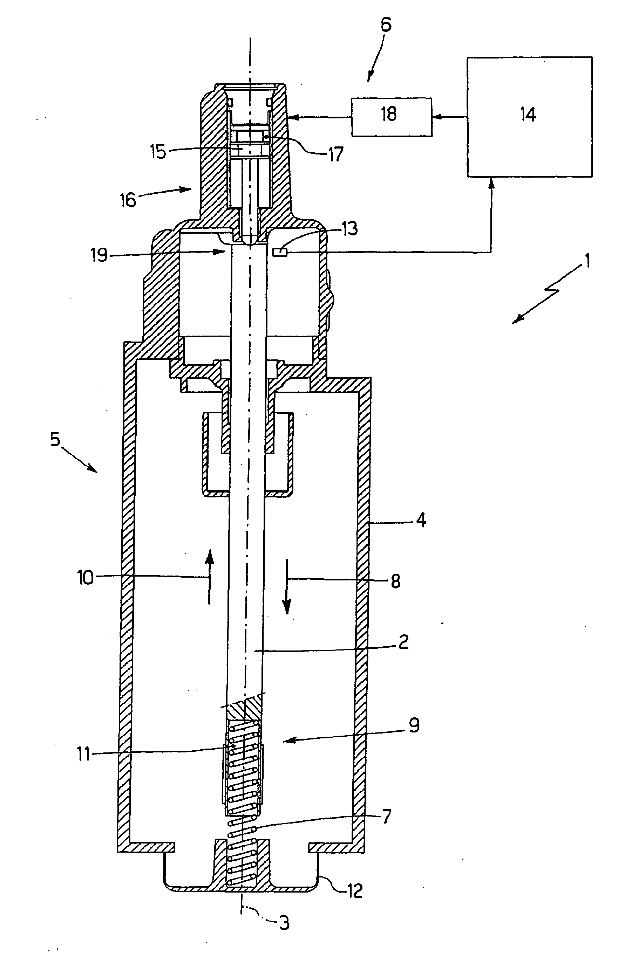

The present invention will now be described with reference to the annexed drawing, which illustrates a non-limiting example of embodiment thereof. In particular, the attached figure is a schematic cross-sectional view, with parts removed for reasons of clarity, of a servo built in accordance with the present invention.

### PREFERRED EMBODIMENTS OF THE INVENTION

In the attached figure, the reference number 1 designates as a whole a servo for a gear change, which is provided with a control shaft 2. The servo 1 acts on the control shaft 2 of the gear change to impress on the control shaft 2 both an axial displacement, i.e., along a central axis 3, for selecting the range of the gears, and a rotation about the central axis 3, for engaging and disengaging the individual gears. The servo 1 of the gear change comprises a fixed frame 4, which is traversed by the control shaft 2 and supports a first hydraulic actuator 5, mechanically coupled to the control shaft 2 for displacing the control shaft 2 axially, and a second hydraulic actuator (not illustrated), mechanically coupled to the control shaft 2 for rotating the control shaft 2 about the central axis 3.

The first actuator 5 comprises a thrust device 6, which is coupled to the control shaft 2 for pushing the control shaft 2 along the central axis 3 in one direction 8, and a spring 7, which rests against one end 9 of the control shaft 2 and is normally compressed for pushing the control shaft 2 along the central axis 3 in a direction 10 opposite to the direction 8.

In a position corresponding to the end 9, the control shaft 2 has a cylindrical blind hole 11 set inside which is a portion of the spring 7, which is compressed between the control shaft 2 and a lid 12, fixed in a removable way to the fixed frame 4.

In addition, the first actuator 5 comprises a position sensor 13 for reading the axial position of the control shaft 2 along its own central axis 3, and a control device 14, which drives the thrust device 6 using as feedback variable the axial position of the control shaft 2 read by the position sensor 13.

According to a preferred embodiment, the thrust device 6 is of a hydraulic type and comprises a piston 15 inserted within a cylinder 16, defined in which is a single chamber 17, connected to a single solenoid valve 18 (illustrated schematically), which controls filling of the chamber 17 with a pressurized fluid. Preferably, the thrust device 6 is coupled to, in particular rests against, one end 19 of the control shaft 2 opposite to the end 9.

According to a different embodiment (not illustrated), the thrust device 6 is set in a position corresponding to an intermediate portion of the control shaft 2, the chamber 17 of the thrust device 6 is traversed by the control shaft 2, and the piston 15 of the thrust device 6 is defined by a flange fixed to the control shaft 2.

According to a further embodiment (not illustrated), the thrust device 6 is of an electrical type.

Operation of the first actuator 5 is readily understandable in the light of what has been described above: when the thrust device 6 is de-activated, the spring 7 pushes the control shaft 2 along the central axis 3 in the direction 10 up to a top end-of-travel position. Starting from this top end-of-travel position, the thrust device 6 can be activated for pushing the control shaft along the central axis 3 in the direction 8, and hence against the force exerted by the spring 7, until a bottom end-of-travel position is reached. Consequently, by regulating filling of the chamber 17 of the thrust device 6, it is possible to adjust the axial position of the control shaft 2 along the central axis 3.

The first actuator 5 described above presents numerous advantages in so far as it is simple, inexpensive and compact given that it requires the use of just one chamber 17 and hence just one solenoid valve 18. In addition, the first actuator 5 has a useful stroke that is very extensive and is readily modifiable (only replacement of the spring 7 could be required). Consequently, one and the same first hydraulic actuator 5 can be used in a wide range of servo-assisted gear changes.

## Claims

1. A servo (1) for a gear change provided with a control shaft (2); the servo (1) comprising:
a first actuator (5), which is directly coupled to the control shaft (2) for displacing the control shaft (2) axially along a central axis (3) thereof; and
a second actuator, which is coupled to the control shaft (2) for rotating the control shaft (2) about its central axis (3);
the servo (1) is **characterized in that** the first actuator (5) comprises:
a thrust device (6), which is coupled to the control shaft (2) for pushing the control shaft (2) along the central axis (3) in a first direction (8); and
a spring (7), which rests on a first end (9) of the control shaft (2) and is normally compressed for pushing the control shaft (2) along the central axis (3) in a second direction (10) opposite to the first direction (8).

2. The servo (1) according to Claim 1, wherein the first actuator (5) comprises a position sensor (13) for reading the axial position of the control shaft (2) along its own central axis (3), and a control device (14), which drives the thrust device (6) using as feedback variable the axial position of the control shaft (2) read by the position sensor (13).

3. The servo (1) according to Claim 1 or Claim 2, wherein in a position corresponding to the first end (9) the control shaft (2) has a cylindrical blind hole (11), set inside which is a portion of the spring (7).

4. The servo (1) according to Claim 1 or Claim 2 or Claim 3, wherein the spring (7) is compressed between the control shaft (2) and a lid (12) fixed in a removable way to a fixed frame (4) of the servo (1).

5. The servo (1) according to any one of Claims 1 to 4, wherein the thrust device (6) is of a hydraulic type and comprises a piston (15) inserted within a cylinder (16), defined in which is a single chamber (17) connected to a single solenoid valve (18), which controls filling of the chamber (17) with a pressurized fluid.

6. The servo (1) according to Claim 5, wherein the thrust device (6) is coupled to a second end (19) of the control shaft (2) opposite to the first end (9).

7. The servo (1) according to Claim 6, wherein the thrust device (6) rests against the second end (19) of the control shaft (2).

8. The servo (1) according to Claim 5, wherein the first actuator (5) is set in a position corresponding to an intermediate portion of the control shaft (2), the chamber (17) of the thrust device (6) is traversed by the control shaft (2), and the piston (15) of the thrust device (6) is defined by a flange fixed to the control shaft (2).
